Europäisches Patentamt

European Patent Office

Office européen des brevets

(19)

(11) Veröffentlichungsnummer : **0 060 428**
**B1**

(12) # EUROPÄISCHE PATENTSCHRIFT

(45) Veröffentlichungstag der Patentschrift :
**19.12.84**

(21) Anmeldenummer : **82101533.6**

(22) Anmeldetag : **27.02.82**

(51) Int. Cl.³ : **C 09 B 11/20// C09D17/00**

(54) **Triaminotriarylmethanfarbstoffgemische.**

(30) Priorität : 07.03.81 DE 3108720

(43) Veröffentlichungstag der Anmeldung :
**22.09.82 Patentblatt 82/38**

(45) Bekanntmachung des Hinweises auf die Patenterteilung : **19.12.84 Patentblatt 84/51**

(84) Benannte Vertragsstaaten :
**CH DE FR GB IT LI**

(56) Entgegenhaltungen :
**DE-A- 2 753 072**
**DE-A- 2 914 299**
**FR-A- 2 327 290**
**GB-A- 872 561**
**Die Akte enthält technische Angaben, die nach dem**
**Eingang der Anmeldung eingereicht wurden und die**
**nicht In dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Mayer, Udo, Dr.**
**Max-Slevogt-Strasse 27**
**D-6710 Frankenthal (DE)**
Erfinder : **Hahn, Erwin, Dr.**
**Am Buechsenackerhang 31**
**D-6900 Heidelberg (DE)**
Erfinder : **Jesse, Joachim, Dr.**
**Lieslottestrasse 16**
**D-6830 Schwetzingen (DE)**

**0 060 428**

**Beschreibung**

Die Erfindung betrifft Triaminotriarylmethanfarbstoffgemische, erhältlich durch Umsetzung einer Aluminium- oder Eisentrihalogenidkomplexverbindung eines 4, 4', 4''-Trihalogentriphenylmethylhalogenids zunächst mit einer Metanil- oder Sulfanilsäure oder einer β-Naphthylamin-sulfonsäure und dann mit einem oder mehreren Anilinen unter Austausch der 4-ständigen Halogenatome.

Als Ausgangsverbindung kommt insbesondere der Aluminiumchloridkomplex des 4,4',4''-Trichlortriphenylmethylhalogenids in Betracht, dessen Herstellung beispielsweise in der DE-B 10 36 242 und 10 46 599 beschrieben ist.

Für die Umsetzung geeignete ß-Naphthylamin-sulfonsäuren sind z. B. die 2-Naphthylamin-4-, -5-, -6-, -7- oder -8-sulfonsäuren.

Bevorzugt für die erste Umsetzung sind die nicht weiter substituierte Metanil- und Sulfanilsäure.

Die für die 2. Stufe des Austausches brauchbaren Aniline können beispielsweise durch Fluor, Chlor, Brom, $C_1$- bis $C_4$-Alkoxy oder $C_1$- bis $C_4$-Alkoxy oder $C_1$- bis $C_4$-Acylamino substituiert sein, wobei neben Anilin die durch Chlor, Methoxy und insbesondere Methyl substituierten Derivate bevorzugt sind.

Die Molmengen der umzusetzenden Reaktionspartner hängen vom gewünschten Sulfierungsgrad des Endproduktes ab, als obere Grenze ist eine Sulfonsäuregruppe pro Molekül einzuhalten, da nur so Pigmenteigenschaften erzielt werden. Geringere Sulfierungsgrade können nach Belieben durch die Menge der umzusetzenden Sulfonsäure eingestellt werden.

Bei der Umsetzung mit den Anilinen ist darauf zu achten, daß neben der für den Austausch der Halogenatome notwendigen Menge auch noch die zur Bindung des freiwerdenden Halogenwasserstoffs erforderliche Menge anwesend sein sollte. In der Regel genügen 2,5 bis 7 Mol eines Anilins bezogen auf die Metallkomplexverbindung.

Der Halogenaustausch wird zweckmäßigerweise in Lösungsmitteln wie Chlor- oder Dichlorbenzol ausgeführt, die Reaktionstemperaturen liegen üblicherweise im Bereich von 120 bis 180 °C, vorzugsweise 130 bis 160 °C.

Die Reaktionszeiten liegen normalerweise im Bereich von 1 bis 20 Stunden in Abhängigkeit von der Temperatur und dem verwendeten Anilin.

Einzelheiten der Reaktionsführung können den Beispielen entnommen werden, in denen sich Teile und Prozente, sofern nicht anders vermerkt, auf das Gewicht beziehen.

Die erfindungsgemäßen Farbstoffgemische sind violett bis blau und eignen sich nach entsprechendem Finish als Pigmente, beispielsweise zur Herstellung von Druckfarben und zum Schönen von Ruß.

Ähnliche, jedoch anders hergestellte Pigmente sind schon bekannt, siehe z. B. DE-B 10 98 652, DE-A 16 44 619 und DE-A 25 45 649. Bei den bekannten Verfahren werden zunächst die sulfonsäuregruppenfreien Verbindungen hergestellt, die dann durch Sulfierung in die eine Sulfonsäuregruppe tragenden Pigmente überführt werden müssen.

Wegen des fehlenden Sulfonierungsschrittes ist demgegen- über die Herstellung der erfindungsgemäßen Produkte kostengünstiger und umweltfreundlicher.

### Beispiel 1

Ein Gemisch, bestehend aus 44 Teilen Sulfanilsäure, 140 Teilen 4, 4', 4''-Trichlortriphenylmethylaluminium-tetrachlorid und 140 Teilen Chlorbenzol, wird solange bei Rückflußtemperatur gehalten, bis nach ca. 3 Stunden kein Chlorwasserstoffgas mehr entwickelt wird. Man setzt dann 134 Teile p-Toluidin zu und hält 2 weitere Stunden bei Rückflußtemperatur. Nach dem Abkühlen auf 90 °C läßt man 200 Teile Äthanol und 350 Teile einer 20 %igen Natronlauge zufließen, wobei sich 2 Phasen bilden. Die untere wäßrige Phase wird abgetrennt. Die organische Phase wird durch Vakuumdestillation von den Lösungsmitteln und dem überschüssigen p-Toluidin befreit. Nachdem man den Destillationsrückstand in 1 500 Teilen einer 5 %igen Natronlauge aufgenomen hat, wird 25 %ige Schwefelsäure zugegeben. Bei einem pH-Wert von 5-6 kristallisiert der Farbstoff aus. Man senkt dann pH-Wert auf 1,5 ab, saugt den Farbstoff ab und trocknet bei 70 °C. Man erhält 135 Teile. Der Farbstoff kann zu grünstichig blauen Druckfarben verarbeitet werden.

### Beispiel 2

Wenn man wie in Beispiel 1 verfährt und anstelle der Sulfanilsäure die gleiche Gewichtsmenge Metanilsäure verwendet, werden 129 Teile eines grünstichig blauen Farbstoffes erhalten.

### Beispiel 3

Weitere blaue Farbstoffe, die gemäß Beispiel 1 und 2 durch Austauschen von p-Toluidin hergestellt worden sind, sind in der Tabelle beschrieben :

2

| Beispiel | Sulfonsäure | Anilinderivat | Ausbeute (Teile) |
|---|---|---|---|
| 3 | Sulfanilsäure | m-Toluidin | 136 |
| 4 | Metanilsäure | m-Toluidin | 142 |
| 5 | Sulfanilsäure | p-Anisidin | 139 |
| 6 | Metanilsäure | p-Anisidin | 129 |
| 7 | Sulfanilsäure | p-Chloranilin | 115 |
| 8 | Sulfanilsäure | m-Chloranilin | 121 |

### Beispiel 9

Ein Gemisch von 30 Teilen Sulfanilsäure, 140 Teilen 4,4',4''-Trichlortriphenylmethyl-aluminiumtetrachlorid und 140 Teilen Chlorbenzol wird in Beispiel 1 ca. 3 Stunden bei Rückflußtemperatur gehalten. Danach gibt man 116 Teile Anilin zu und erhitzt weitere 14 Stunden ünter Rückfluß. Nach der Zugabe von 120 Teilen Isopropanol und 350 Teilen einer 20 %igen Natronlauge bei 90 °C wird die untere wäßrige Phase abgetrennt. Die organische Phase wird in 1 000 Teilen Wasser aufgenommen. Nachdem man mit 25 %iger Schwefelsäure einen pH-Wert von 7 eingestellt hat, werden die Lösungsmittel durch Wasserdampfdestillation entfernt. Dabei beginnt der Farbstoff zu kristallisieren. Man stellt schließlich einen pH-wert von 1 ein, saugt den Farbstoff bei 60 °C ab und trocknet bei 70 °C. Man erhält dabei 125 Teile eines neutral blauen Farbstoffes, der sich als Druckfarbe besonders zum Schönen von Ruß eignet.

### Beispiel 10

Ein Gemisch von 44 Teilen Sulfanilsäure, 140 Teilen 4',4'',4'''-Trichlortriphenylmethyl-aluminiumtetrachlorid und 250 Teilen o-Dichlorbenzol wird 1 Stunde bei 170 °C gehalten. Danach gibt man 140 Teile Anilin zu und hält noch 3 Stunden bei 170 °C. Nach dem Aufarbeiten des Ansatzes gemäß Beispiel 1 werden 119 Teile eines rotstichig blauen Farbstoffes erhalten, der für Druckfarben geeignet ist.

### Beispiel 11

Verfährt man wie in Beispiel 1 und verwendet anstelle von p-Toluidin o-Toluidin, so wird ebenfalls ein rötlich blauer Farbstoff gewonnen.

### Beispiel 12

Ein Gemisch von 15,6 Teilen Sulfanilsäure, 56,6 Teilen 4,4',4''-Trichlortriphenylmethyl-aluminiumtetrachlorid und 60 Teilen Chlorbenzol wird 3 Stunden bei Rückflußtemperatur gehalten. Bei dieser Temperatur gibt man zunächst 12,8 Teile m-Toluidin und nach weiteren 2 Stunden 27,9 Teile Anilin zu. 10 Stunden nach der Zugabe des Anilins wird abgekühlt und wie in Beispiel 1 aufgearbeitet. Man erhält 50 Teile eines für Druckfarben geeigneten blauen Farbstoffes.

Farbstoffgemische mit ähnlichen Eigenschaften werden gewonnen, wenn man nach Beispiel 12 verfährt und anstelle von m-Toluidin die äquimolaren Mengen p-Toluidin, p-Anisidin oder p-Chloranilin verwendet.

### Beispiel 13

Man setzt wie in Beispiel 9 30 Teile Sulfanilsäure und 116 Teile Anilin mit 140 Teilen 4,4',4''-Trichlortriphenylmethyl-aluminiumtetrachlorid um. Nach dem 14-stündigen Erhitzen läßt man das heiße Reaktionsgemisch in 2 000 Teile Wasser einlaufen. Nachdem man 30 Minuten bei 60 °C nachgerührt hat, wird das kristallin angefallene Produkt abgesaugt, zunächst mit 1 000 Teilen Wasser und danach mit 400 Teilen Chlorbenzol gewaschen. Nach dem Trocknen werden 118 Teile eines neutral blauen Farbstoffes erhalten, der nach einem entsprechenden Finish für die Herstellung von Druckfarben geeignet ist.

### Ansprüche

1. Triaminotriarylmethanfarbstoffgemische, erhältlich durch Umsetzung einer Aluminium- oder Eisentrihalogenidkomplexverbindung eines 4,4',4''-Trihalogentriphenylmethylhalogenids zunächst mit einer Metanil- oder Sulfanilsäure oder einer β-Naphthylamin-sulfonsäure und dann mit einem oder mehreren Anilinen unter Austausch der 4-ständigen Halogenatome.

2. Gemische gemäß Anspruch 1, erhältlich durch Umsetzung des Aluminiumkomplexes.

3

3. Gemische gemäß Anspruch 1, erhältlich durch Umsetzung von Metanil- oder Sulfanilsäure.

4. Gemische gemäß Anspruch 1 mit einem Sulfierungsgrad von 0,3 bis 0,9.

5. Gemische gemäß Anspruch 1, erhältlich durch Umsetzung der Reaktionspartner in Chlorbenzol oder Dichlorbenzol.

**Claims**

1. A triaminotriarylmethane colorant mixture which is obtainable by first reacting an aluminum or iron trihalide complex of a 4,4',4''-trihalotriphenylmethyl halide with a metanilic acid, a sulfanilic acid or a β-naphthylaminesulfonic acid and then reacting the product with one or more anilines to replace the halogen atoms located in the 4-position.

2. A mixture as claimed in claim 1, which is obtainable by reacting the aluminum complex.

3. A mixture as claimed in claim 1, which is obtainable by reacting acid metanilic acid or sulfanilic acid.

4. A mixture as claimed in claim 1, which has a degree of sulfonation of from 0.3 to 0.9.

5. A mixture as claimed in claim 1, which is obtainable by reacting the reactants in chlorobenzene or dichlorobenzene.

**Revendications**

1. Mélanges de colorants triaminotriarylméthaniques, obtenus par la mise en réaction d'un complexe composé de trihalogénure d'aluminium ou de fer et d'un halogénure de triphénylméthyle 4,4',4''-trihalogéné, tout d'abord avec un acide métanilique ou sulfanilique ou un acide β-naphtylaminosulfonique, puis avec une ou plusieurs anilines avec échange des atomes d'halogène en 4$^{ème}$ position.

2. Mélanges selon la revendication 1, obtenus par la mise en réaction du complexe d'aluminium.

3. Mélanges selon la revendication 1, obtenus par la mise en réaction d'acide métanilique ou sulfanilique.

4. Mélanges selon la revendication 1 ayant un degré de sulfonation compris entre 0,3 et 0,9.

5. Mélanges selon la revendication 1, obtenus par la mise en réaction des partenaires réactionnels dans le chlorobenzène ou le dichlorobenzène.